# EUROPEAN PATENT APPLICATION

(11) **EP 2 830 196 A1**
(43) Date of publication of application: **28.01.2015**
(21) Application number: 13763456.4
(22) Date of filing: 20.03.2013
(51) Int. Cl.: H02K 5/14, H02K 5/04

(54) **ELECTRIC MOTOR AND ELECTRIC BRUSH BRACKET THEREOF**

(30) Priority: 20.03.2012 CN 201220106036 U
(71) Applicant: Bosch Automotive Products (Changsha) Co., Ltd, Changsha, Hunan 410100 (CN)
(72) Inventor: ZHENG, Haibo, Changsha Hunan 410100 (CN); GAN, Xing, Changsha Hunan 410100 (CN); ZHANG, Yuanyin, Changsha Hunan 410100 (CN); HEYDER, Martin, Changsha Hunan 410100 (CN); QIU, Dong, Changsha Hunan 410100 (CN)
(74) Representative: Bee, Joachim
(86) International application number: PCT/CN2013/072907
(87) International publication number: WO 2013/139265

(57) **Abstract**

The invention relates to a brush holder of a motor, which comprises a bearing seat for mounting a bearing which is configured for carrying an output shaft of the motor, the bearing seat comprising a lip portion and a shoulder connected with the lip portion, an interference fit being established between an inner circumferential surface of the lip portion and an outer circumferential surface of an outer ring of the bearing, and the shoulder abutting an end of the bearing, wherein the bearing seat of the brush holder further comprises a plurality of protruding ribs which protrude inwardly along a radial direction from the inner circumferential surface and which are elastic to be deformable under the compression of the outer ring of the bearing, and each protruding rib has a recess formed between at least one side of the each protruding rib and a portion of the inner circumferential surface adjacent to the at least one side and recessed inwardly along the radial direction from the portion of the inner circumferential surface. The invention relates to a motor comprising the brush holder.

## Description

### Technical Field

The invention generally relates to a brush holder of an electric motor and to the electric motor comprising the brush holder.

### Background Art

For a motor, brushes are often used for electrically connection with a commutator of the motor. As is well known in the field of electric motor, the brushes of the motor are very important components which directly affect the service life of the motor with the brushes. Generally, a brush is held by a brush holder, and thus the brush holder and the brush both are very important components. No matter what a good property of the brush has, the property can not be implemented sufficiently if the brush holder is inappropriate, and the property and the service life of the motor itself will be adversely affected.

In general, the brush holder is mounted in a motor housing of the motor, with an output shaft of the motor extending out of the motor housing via a bearing which is mounted in the brush holder. In particular, the bearing for carrying the output shaft of the motor is mounted on the brush holder. In particular, an outer ring of the bearing is fixed to the brush holder via an interference fit with the brush holder.

As the bearing is a standard part available from market, it is required that the brush holder is specially designed to be fitted with the standard bearing. In particular, the interference fit between the bearing and the brush holder should be ensured by the molding and assembling of the brush holder so that the bearing can be securely mounted in the brush holder, without being detached from it, especially during transportation and assembling of the motor.

Generally, the brush holder is a molded integral part with the aid of a specialized mould. Due to the above technical process of forming the brush holder, an end of the brush holder contacting the bearing and an inner circumferential surface of the brush holder contacting the bearing are not strictly perpendicular to each other, but form a certain angle (an taper angle), the magnitude of the angle directly affecting the fitness between the brush holder and the bearing.

It is thus desired to decrease the taper angle of the molded brush holder to the most possible extent to ensure the proper fit between a bearing seat of the brush holder and the bearing, while reducing the tolerance requirements and the manufacturing cost of the brush holder.

### Summary of the Invention

An object of the application is to decrease a taper angle of a brush holder to be molded to solve the problem that a bearing for an output shaft of a motor may be detached from a brush holder during transportation and assembling of the motor, while reducing the manufacturing cost of the brush holder.

According to an aspect of the invention, a brush holder of a motor is provided, which comprises: a bearing seat for mounting a bearing which is configured for carrying an output shaft of the motor, the bearing seat comprising a lip portion and a shoulder connected with the lip portion, an interference fit being established between an inner circumferential surface of the lip portion and an outer circumferential surface of an outer ring of the bearing, and the shoulder abutting an end of the bearing, wherein the bearing seat of the brush holder further comprises a plurality of protruding ribs which protrude inwardly along a radial direction from the inner circumferential surface and which are elastic to be deformable under the compression of the outer ring of the bearing, and each protruding rib has a recess formed between at least one side of the each protruding rib and a portion of the inner circumferential surface adjacent to the at least one side and recessed inwardly along the radial direction from the portion of the inner circumferential surface.

According to a preferred embodiment, recesses are formed between opposite sides of each protruding rib and portions of the inner circumferential surface adjacent to the opposite sides which are recessed outwardly along the radial direction form the portions of the inner circumferential surface.

According to a preferred embodiment, the plurality of protruding ribs are spaced apart from each other uniformly along a circumferential direction of the inner circumferential surface of the bearing seat. In the illustrated embodiment, six protruding ribs are provided. Of course, any number of protruding ribs can be provided as desired.

According to a preferred embodiment, the protruding ribs extend parallel to a central axis of the brush holder or extend helically around the central axis of the brush holder. With the protruding ribs extending helically, the bearing can be mounted into the bearing seat more easily.

According to a preferred embodiment, the brush holder further comprises a groove extending from a connecting portion between the lip portion and the shoulder along an axial direction into the bearing seat.

According to a preferred embodiment, either or both of the recesses and the protruding ribs have a generally trapezoidal, triangular, rectangular or circular cross section.

According to a preferred embodiment, the distance from innermost surfaces of the protruding ribs in the radial direction to the central axis of the brush holder is between 0.9-0.95 times of the radius of an inner surface of the bearing seat of the brush holder.

According to a preferred embodiment, the distance from outermost surfaces of the recesses in the radial direction to the central axis of the brush holder is between 1.15-1.2 times of the radius of an inner surface of the bearing seat of the brush holder.

According to another aspect of the invention, a motor comprising the brush holder is provided.

According to a preferred embodiment, the motor is a motor used in an ABS system for a vehicle, or a motor used in an ESP system for a vehicle. Alternatively, the motor can be a motor used in a power tool, such as an electric drill or an electric saw, or a motor used in other apparatus.

A brush holder according to the invention is provided with a plurality of protruding ribs which protrude inwardly along a radial direction from an inner circumferential surface of a bearing seat and which are elastic to be deformable under compression of an outer ring of the bearing. Each protruding rib has a recess formed between at least one side of the each protruding rib and a portion of the inner circumferential surface adjacent to the at least one side and recessed inwardly along the radial direction from the portion of the inner circumferential surface. On one hand, a taper angle of the inner circumferential surface of the bearing seat of the molded brush holder is decreased, and on the other hand, when the bearing for carrying an output shaft of a motor is mounted into the bearing seat, the protruding ribs are deformed into the adjacent recesses under the compression of the outer ring of the bearing, so that the outer ring of the bearing is securely fixed in the bearing seat. In this way, the technical problem that the bearing for carrying the output shaft of the motor may be detached from the brush holder during the transportation and assembling of the motor is avoided.

### Brief Description of the Drawings

A brush holder according to the invention is shown in the drawings merely for the purpose of illustration. The drawings may not be depicted to scale, in which:
Figure 1 shows that a brush holder according to the invention is mounted in a motor housing;
Figure 2 is a top plan view of the brush holder according to the invention, wherein a bearing for carrying an output shaft of a motor is mounted in the brush holder;
Figure 3 is a perspective view of the brush holder according to the invention, wherein the bearing for carrying the output shaft of the motor is mounted in the brush holder;
Figure 4 is a perspective view of the brush holder according to the invention, wherein the bearing for carrying the output shaft of the motor is removed;
Figure 5 is an enlarged view of area "A" shown in Figure 4; and
Figure 6 is a simplified illustrative view of protruding ribs and recesses of a brush holder constructed according to an alternative embodiment; and
Figure 7 is a partially enlarged view of the recesses and the protruding ribs of Figure 6.

### Detailed Description of Preferred Embodiments

A brush holder according to the invention (also called an electric brush holder or a carbon brush holder) can be used in an electric motor of any power tool and in an electric motor of other apparatus, such as in an electric motor of an ABS system or in an electric motor of an ESP system for a vehicle.

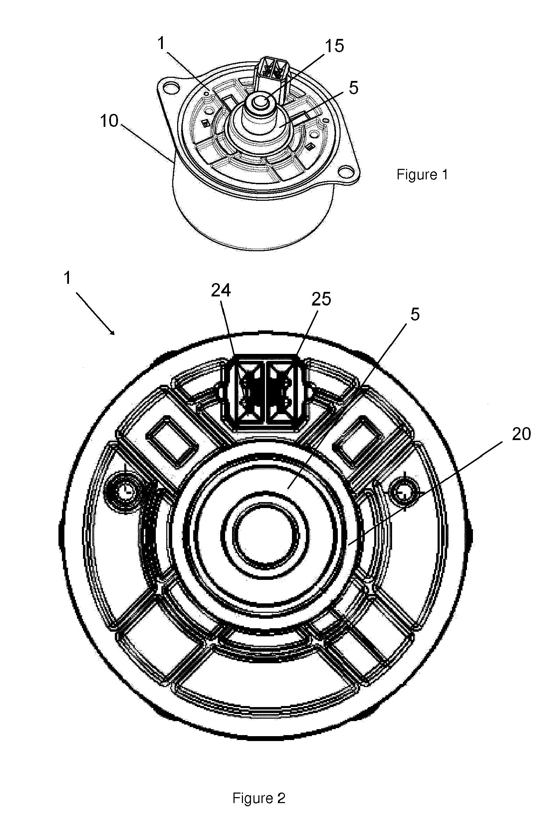

In an embodiment according to the invention, a brush holder is denoted by a reference number 1. Figure 1 shows that the brush holder 1 according to the invention is mounted in an electric motor housing 10.

In use, the brush holder 1 is mounted in the motor housing 10 in which a motor (not shown) is accommodated, for example, by press-fit, to circumferentially fix the brush holder 1 in the motor housing 10.

In general, the motor housing 10 is a forged metal part and is formed as a generally cylindrical "barrel" with smooth surfaces, with an end closed and an end open for mounting the brush holder 1.

Preferably, the brush holder is a molded integral part.

An output shaft 15 of the motor accommodated in the motor housing 10 extends out of the motor housing 10 via a bearing which is mounted in a central hole of the brush holder 1.

The brush holder 1 according to the invention will be described with reference to Figures 2-6. In the context, a "radial direction" is a direction along a radius of the brush holder 1, and an "axial direction" is a direction along which a central axis of the brush holder extends.

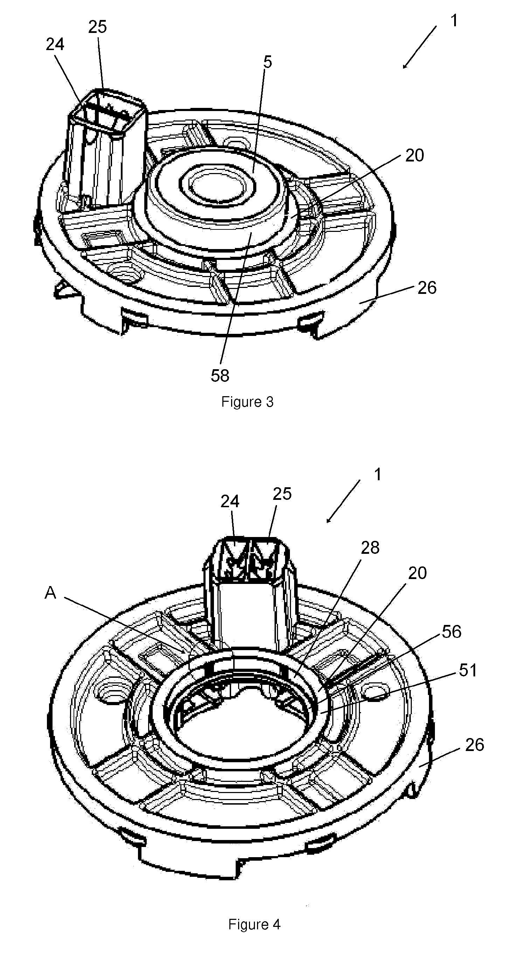

Figure 2 is a top plan view showing that the bearing 5 for carrying the output shaft 15 of the motor is mounted in the brush holder 1 according to the invention, Figure 3 is a perspective view showing that the bearing 5 for carrying the output shaft 15 of the motor is mounted in the brush holder 1 according to the invention, and Figure 4 is a perspective view of the brush holder 1 according to the invention with the bearing 5 removed.

As shown in Figure 2, the brush holder 1 is shaped as a generally flat disc and has a cylindrical outer surface 26 which is configured to be press-fit into and circumferentially fixed in the motor housing 10.

The brush holder 1 comprises cable passages 24 and 25 through which cables connected with positive and negative poles of the motor extend into the motor housing 10.

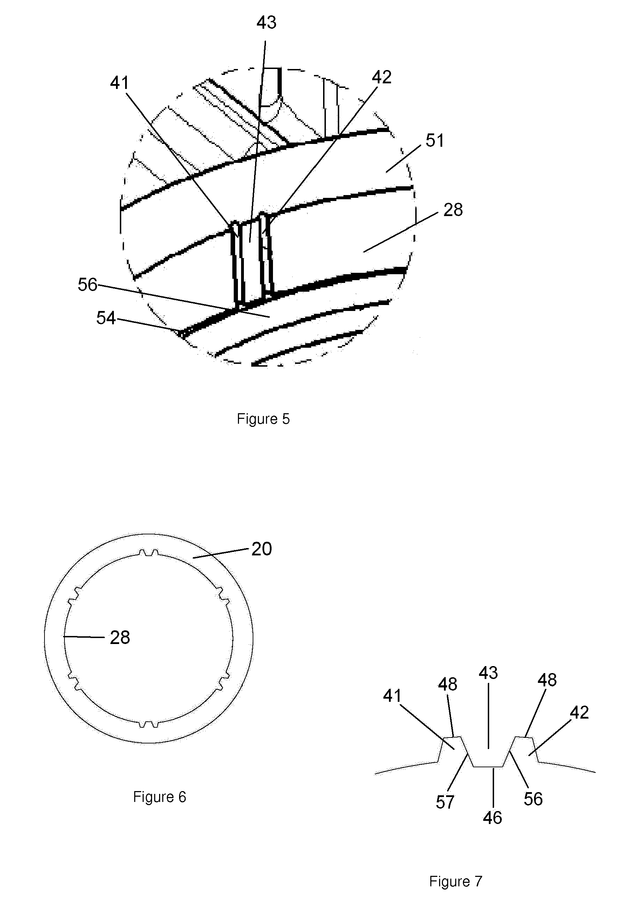

The brush holder 1 further comprises a bearing seat 20 for mounting the bearing 5 which is configured for supporting the output shaft 15 of the motor. The bearing seat 20 comprises a generally annular lip portion 51 and a shoulder 56 (Figure 5) protruding inwardly from the lip portion 51.

The bearing seat 20 comprises an inner circumferential surface 28 which is configured to cooperate with an outer circumferential surface 58 of an outer ring of the bearing 5. In general, an interference fit is established between the inner circumferential surface 28 of the bearing seat 20 and the outer circumferential surface 58 of the outer ring of the bearing 5, and thus the inner circumferential surface 28 of the bearing seat 20 has a radius smaller than that of the outer circumferential surface 58 of the outer ring of the bearing 5. When the output shaft 15 of the motor rotates, the outer ring of the bearing 5 remains stationary and an inner ring of the bearing 5 is rotated with the output shaft 15 of the motor.

The bearing seat 20 further comprises the shoulder 56 (Figure 5). When the bearing 5 is mounted in the bearing seat 20 of the brush holder 1, an end of the bearing 5 in a mating direction abuts the shoulder 56 of the bearing seat 20.

However, despite the interference fit between the inner circumferential surface 28 of the bearing seat 20 and the outer circumferential surface 58 of the outer ring of the bearing 5, there is still a risk that the outer circumferential surface 58 of the outer ring of the bearing 5 is detached from the inner circumferential surface 28 of the bearing seat 20 during transportation and assembling of the motor, which will cause unexpected troubles.

To solve the above problem, as shown in Figures 4-6, the brush holder 1 according to the invention is provided with a protruding rib and recess structure on the inner circumferential surface 28 of the bearing seat 20 of the brush holder 1 cooperating with the outer circumferential surface 58 of the outer ring of the bearing 5.

As can be seen from Figure 4 and from an enlarged view in Figure 5, the inner circumferential surface 28 of the bearing seat 20 of the brush holder 1 is provided with a plurality of protruding ribs 43 protruding inwardly along the radial direction from the inner circumferential surface 28 of the bearing seat 20 of the brush holder 1, forming innermost surfaces 46 closest to the central axis of the brush holder 1. The innermost surface 46 has a distance from the central axis of the brush holder 1 smaller than the radius of the inner circumferential surface 28 of the bearing seat 20.

According to a preferred embodiment, the distance from the innermost surface 46 of the protruding rib 43 in the radial direction to the central axis of the brush holder 1 is between 0.9-0.95 times of the radius of the inner circumferential surface 28 of the bearing seat 20 of the brush holder 1.

Recesses 41 and 42 are formed between opposite sides of each protruding rib 43 and portions of the inner circumferential surface 28 adjacent to the respective sides, which are recessed outwardly along the radial direction from the portions of the inner circumferential surface 28, and the recesses 41 and 42 each comprise outermost surfaces 48 furthest from the central axis of the brush holder 1. The distance from the outermost surface 48 to the central axis of the brush holder 1 is greater than the radius of the inner circumferential surface 28 of the bearing seat 20 of the brush holder 1.

According to a preferred embodiment, the distance from the outermost surfaces 48 of the recesses 41 and 42 in the radial direction to the central axis of the brush holder 1 is between 1.15-1.2 times of the radius of the inner circumferential surface 28 of the bearing seat 20 of the brush holder 1.

Each protruding rib 43 is formed between the recesses 41 and 42 and comprises side surfaces 57 and 56 adjacent to the recesses 41 and 42 respectively, as shown in Figure 7.

In this way, when the bearing 5 is mounted to the bearing seat 20, the outer ring of the bearing 5 is first subjected to a radially inward force applied thereto by the innermost surfaces 46 of the protruding ribs 43, and thus simultaneously the innermost surfaces 46 of the protruding ribs 43 are compressed in an outward direction by the outer ring of the bearing 5.

Further, a groove 54 is formed at a connection portion of the lip portion 51 with the shoulder 56, the groove extending along a circumferential direction of the bearing seat 20. The groove 54 extends into the bearing seat 20 away from the lip portion 51 along the axial direction of the brush holder, and the groove 54 has a radial width in a direction toward the central axis of the brush holder from the connection portion of the lip portion 51 with the shoulder 56.

Due to the interaction between the outer circumferential surface 58 of the outer ring of the bearing 5 and the innermost surfaces 46 of the protruding ribs 43, the protruding ribs 43 are resiliently deformed, causing the innermost surfaces 46 of the protruding ribs 43 to be moved further away from the central axis of the brush holder 1. At the same time, the side surfaces 57 and 56 of the protruding ribs 43 which are adjacent to the recesses 41 and 42 are forced to move towards and into the recesses 41 and 42 and the groove 54, at least filling portions of the recesses 41 and 42 and the groove 54 respectively.

Finally, the innermost surfaces 46 of the protruding ribs 43 may be situated on a circle delimited by the inner circumferential surface 28 of the bearing seat 20. At this time, the outer circumferential surface 58 of the outer ring of the bearing 5 is in contact with the inner circumferential surface 28 of the bearing seat 20 so that the bearing 5 is placed into position via the interference fit with the bearing seat 20.

Alternatively, the innermost surfaces 46 of the protruding ribs 43 may be moved to a location within the circle defined by the inner circumferential surface 28 of the bearing seat 20, and thus the innermost surfaces 46 of the protruding ribs 43 are compressed not so much as to be located on the cylindrical surface defined by the inner circumferential surface 28 of the bearing seat 20. At this time, the outer circumferential surface 58 of the outer ring of the bearing 5 is in contact with the deformed innermost surfaces 46 of the protruding ribs 43 so that the bearing 5 is placed into position via the interference fit with the bearing seat 20.

In either case, upon the bearing 5 being mounted into the brush holder 1 according to the invention, the protruding ribs 43 are deformed, and a force that is applied to the outer ring of the bearing 5 by the deformed innermost surfaces 46 of the protruding ribs 43 is greater than the force applied to the outer ring of the bearing 5 by the inner circumferential surface 28 of the bearing seat 20. In this way, a more stable and secure fixation of the bearing 5 in the bearing seat 20 is achieved, and the risk that the bearing 5 is detached from the bearing seat 20 is effectively avoided.

In addition, as the bearing 5 is a standard part available from market, the interference fit between the bearing 5 and the bearing seat 20 is ensured by the molding and mounting process of the bearing seat 20, which requires that the radius of the inner circumferential surface 28 of the bearing seat 20 has a strict tolerance suitable for the interference fit between the bearing 5 and the bearing seat 20. With the brush holder 1 according to the invention, the tolerance requirement of the inner circumferential surface 28 of the bearing seat 20 is reduced while ensuring the interference fit between the bearing 5 and the bearing seat 2, which results in a simplified manufacture process and a reduced cost of the bearing seat 20.

On the other hand, as the brush holder 1 is a molded part by means of a mould, the recesses 41 and 42 and the groove 45 also facilitates to decrease a taper angle of the bearing seat 20 of the brush holder 1, and further facilitates the fitness between the bearing seat 20 and the bearing 5.

Preferably, the plurality of protruding ribs 43 are distributed uniformly along the circumferential direction of the inner circumferential surface 28 of the bearing seat 20, so that the outer ring of the bearing 5 is subjected to the forces evenly.

In the illustrated embodiment, six protruding ribs are provided uniformly along a circumference of the inner circumferential surface 28 of the bearing seat 20 of the brush holder 1 (see Figure 6). Or course, the brush holder 1 may comprise any number of protruding ribs.

As can be seen from Figure 4, the recesses 41 and 42 and the protruding ribs 43 extend across the entire bearing seat 20 along the axial direction of the brush holder 1.

In another embodiment, to facilitate the mounting of the bearing 5 into the bearing seat 20, the recesses 41 and 42 and the protruding ribs 43 may be provided to extend out helically along the axial direction from the inner circumferential surface 28 of the bearing seat 20 of the brush holder 1.

Figure 5 illustratively shows the recesses 41 and 42 and the protruding ribs 43 according to one embodiment of the invention. The recesses 41 and 42 are shown to have a generally triangular cross section, while the protruding rib 43 between the recesses 41 and 42 is shown to have a generally trapezoidal cross section. The protruding rib 43 extends by a certain length along the circumferential direction of the inner circumferential surface 28, so that, upon the mounting of the bearing 5, a sufficient contact area is provided between the protruding rib 43 and the outer ring of the bearing 5 and a sufficient force can be applied to the outer ring of the bearing 5.

According to another embodiment of the invention, as shown in Figures 6 and 7, the recesses 41 and 42 and the protruding ribs 43 all have a generally trapezoidal shape. The recesses 41 and 42 and the protruding ribs 43 can be further formed with fillets or formed to have a circular cross section.

It should be understood by a skilled in the art that the shape and size of the cross section of the recesses 41 and 42 and of the protruding ribs 43 and the number of the recesses 41 and 42 and of the protruding ribs 43 distributed along the inner circumferential surface 28 can be designed according to actual demands.

The brush holder according to the invention is provided with a plurality of protruding ribs which protrude inwardly along the radial direction from the inner circumferential surface of the bearing seat and which are elastic to be deformable under the compression of the outer ring of the bearing. Each protruding rib has a recess formed between at least one side of the each protruding rib and a portion of the inner circumferential surface adjacent to the at least one side and recessed inwardly along the radial direction from the portion of the inner circumferential surface. On one hand, the taper angle of the inner circumferential surface of the bearing seat of the molded brush holder is decreased, and on the other hand, when the bearing for carrying the output shaft of the motor is mounted into the bearing seat, the protruding ribs are deformed into the adjacent recesses under the compression of the outer ring of the bearing, so that the outer ring of the bearing is securely fixed in the bearing seat. In this way, the technical problem that the bearing for carrying the output shaft of the motor may be detached from the brush holder during the transportation and assembling of the motor is avoided.

While preferred embodiments of the invention have been described as above, it should be appreciated by a skilled in the art that features and aspects described with reference to one embodiment can be applied to other embodiments according to the invention without departing from the scope defined by the claims, and the invention intends to cover all amendments and variants falling within the scope of the claims.

## Claims

1. A brush holder of a motor comprising:
a bearing seat for mounting a bearing which is configured for carrying an output shaft of the motor, the bearing seat comprising a lip portion and a shoulder connected with the lip portion,
an interference fit being established between an inner circumferential surface of the lip portion and an outer circumferential surface of an outer ring of the bearing, and the shoulder abutting an end of the bearing,
wherein the bearing seat of the brush holder further comprises a plurality of protruding ribs which protrude inwardly along a radial direction from the inner circumferential surface and
which are elastic to be deformable under the compression of the outer ring of the bearing, and
each protruding rib has a recess formed between at least one side of the each protruding rib and a portion of the inner circumferential surface adjacent to the at least one side and recessed inwardly along the radial direction from the portion of the inner circumferential surface.

2. The brush holder according to claim 1, wherein recesses are formed between opposite sides of each protruding rib and portions of the inner circumferential surface adjacent to the opposite sides which are recessed outwardly along the radial direction form the portions of the inner circumferential surface.

3. The brush holder according to claim 2, wherein the plurality of protruding ribs are spaced apart from each other uniformly along a circumferential direction of the inner circumferential surface of the bearing seat.

4. The brush holder according to claim 1, wherein the protruding ribs extend parallel to a central axis of the brush holder or extend helically around the central axis of the brush holder.

5. The brush holder according to claim 4, wherein the brush holder further comprises a groove extending from a connecting portion between the lip portion and the shoulder along an axial direction into the bearing seat.

6. The brush holder according to any one of claims 1-5, wherein either or both of the recesses and the protruding ribs have a generally trapezoidal, triangular, rectangular or circular cross section.

7. The brush holder according to any one of claims 1-5, wherein the distance from innermost surfaces of the protruding ribs in the radial direction to the central axis of the brush holder is between 0.9-0.95 times of the radius of an inner surface of the bearing seat of the brush holder

8. The brush holder according to any one of claims 1-5, wherein the distance from outermost surfaces of the recesses in the radial direction to the central axis of the brush holder is between 1.15-1.2 times of the radius of an inner surface of the bearing seat of the brush holder.

9. A motor comprising a brush holder according to any one of claims 1-8.

10. The motor according to claim 9, wherein the motor is a motor used in an ABS system for a vehicle.

11. The motor according to claim 9, wherein the motor is a motor used in an ESP system for a vehicle.
